# EUROPEAN PATENT SPECIFICATION

(11) **EP 3 069 859 B1**
(45) Date of publication and mention of the grant of the patent: **11.11.2020**
(21) Application number: 16159234.0
(22) Date of filing: 08.03.2016
(51) Int. Cl.: B29C 71/00, B29C 71/02, E04C 5/07, B29C 70/54, B29C 70/52

(54) **PROCESS FOR MAKING A SO-CALLED "STAPLE" CONNECTOR**
VERFAHREN ZUR HERSTELLUNG EINES KOHLENSTOFFFASERVERSTÄRKTEN VERBINDERS
PROCÉDÉ DE RÉALISATION D'UN CONNECTEUR DU TYPE DIT À TOUFFE DE FIBRES

(30) Priority: 16.03.2015 IT VI20150072
(43) Date of publication of application: 21.09.2016
(73) Proprietor: Carbonveneta Tecnologia Nei Compositi S.r.l., 36040 Vicenza (IT)
(72) Inventor: PESAVENTO, DINO, 36040 VICENZA (IT); PESAVENTO, LUCIANO, 36040 VICENZA (IT)
(74) Representative: Bettello, Pietro

(56) References cited:
- EP-A2- 0 170 499
- WO-A1-99/10613
- WO-A1-2014/032846
- WO-A1-2014/195504
- JP-A- 2011 169 080
- US-A- 2 737 802
- US-A- 4 483 904
- US-B1- 7 574 840

## Description

The present finding relates to a process for making a so-called "staple" connector, according to claim 1.

During the life of a building or, more generally, of a built structure, it may happen that the load-bearing capacity is no longer adequate to fulfil the dynamic and static functions, whereby it becomes necessary to carry out interventions designed to reactivate said functions.

Specifically, these structural reinforcement interventions are performed when it is necessary to increase the load-bearing capacity of floor slabs, masonry structures, curtain walls, mixed masonry facings, repair of structures damaged by earthquakes, fires and simple degradation or for seismic adjustments of vaulted structures; substantially, in all those cases which require an increase in the rigidity of an article and its strength.

A widely used method in the building industry for structural reinforcement provides the use of so-called "staple" reinforcement connectors, which have the function of structural connectors between the support, consisting of beams, walls or other masonry structures and the structural reinforcement, generally consisting of networks, materials, panels, laminae or other reinforced supports.

A "staple" reinforcement connector consists of a bundle of unidirectional fibres with a high technical content, such as high strength carbon fibres, "E-type" fibreglass, Kevlar®, Aramid or other fibres and is configured as a filiform body with a substantially circular section.

Specifically, a so-called "staple" connector has a half of the length of the filiform body consisting of a rigid part consisting of a bundle of mutually bonded fibres, while the other half consists of the unidirectional loose fibres, arranged parallel and/or mutually wound, which form the actual "staple".

Operationally, the "staple" connector is used by inserting the rigid part into the hole made on the support (wall or other article), where it is held by filling the hole itself with an epoxy resin or other type of medium viscosity adhesive, while the protruding part , the actual "staple", is extended, arranging the open fibres, frayed and resting above the structure to be connected.

Exemplifying, in renovations or strengthening works and stability of beams, walls, vaults made of brick or concrete, pultruded sheets or soft fabrics of fibreglass, carbon or other material, having a reinforcement function, are applied by adherence. Usually, this application only consists in bonding, while when a higher strength (even to tear) and excellent "adhesion" to the support structure (brick, cement or wood) are desired, reinforcement connectors, of the "staple" type are also used, fraying as a circle or fan the free fibres of the "staple" on the surface of the sheet or reinforcement fabric; the frayed fibres are then impregnated with resin to obtain the bonding thereof on the surface of the sheet or fabric.

In this way, the surface of the sheet or reinforcement fabric is bonded to the connector, which is in turn firmly inserted into the structure, making it a single strengthened body.

Similarly, connectors may be used which consist of a rigid central part and of soft parts on both sides; in this way, it is possible to connect two reinforcement surfaces applied on the two sides of a supporting wall, inserting the rigid part through the hole made on said wall and gluing the two free ends, the "staples", on the reciprocal surfaces of the sheets, positioned on the two sides of said wall.

In the prior art, "staple" connectors are obtained starting from a semi-worked product consisting of a rope made up of a bundle of elongated fibres, held by a tubular protective/containment body consisting of a gauze sock or other tubular container, such as an elastic thread, and sold in the form of rolls, usually 10 m long contained in a practical dispenser.

Basically, to date, in order to make a single "staple" connector, the operator must carry out the following operations:
- cutting a portion of rope, protruding from the dispenser, equal to the length of the connector to be made, which includes the part that fits into the hole of the support and the part that is external to the hole that in place forms the "staple" of frayable fibres;
- pulling back the sock, gauze or elastic thread containing the fibres by a length equal to the depth of the hole to insert the connector so as to expose a portion of the fibre bundle;
- proceeding with impregnating the exposed portion of the fibre bundle with the immersion of said portion in an epoxy resin or other adhesive;
- returning the sock to the starting position of containment of the impregnated fibres;
- sprinkling the impregnated portion with waste silica sand, in order to improve the surface adhesion when the connector is in place;
- waiting for the total drying of the impregnated portion, thus forming the rigid part of the connector;
- completely removing the containment sock that covers the non-impregnated part, so as to free the fibre bundle which, in place, forms the "staple".

The realization of the "staple" connectors described above is normally done on site and for a number of connectors as needed.

In practice, the entire operation, which theoretically seems very simple, is rather difficult, as it requires the need to keep in stock rolls of flexible rope and cans of glue but, above all, for a successful realization of the connector, the operation must be performed accurately and by qualified personnel; everything takes time and financial costs which, in the case of a request for a large number of connectors, are high.

Two significant documents of the prior art are US 7574840 B1 and WO 2014/195504A1. US 4 483 904 A discloses a process according to the preamble of claim 1. Other documents of the prior art are EP 0170499 A2, JP 2011169080 A, WO 99/10613 A1, US 2737802 A and WO 2014/032846 A1.

All of these documents describe a process for making a so-called "staple" connector having rigid portions, alternating with soft portions, consisting of loose fibres that can be opened and frayed, so as to make the so-called "staple".

In these embodiments, one starts from a substantially soft structure and some portions are stiffened, with various types of processes, thus obtaining the desired result.

However, the processes described in these documents, which are automatable, are quite complex and expensive to be implemented and therefore did not have an effective commercial success. Therefore, the "staples" are currently obtained from a simple semi-worked product consisting of rope, with the methods described above. The most important document of the state of the art is US 4483904, in which is described a process for making a connector consisting of at least one rigid portion and at least one soft portion; this soft portions are obtained by means of a heating step at high temperature.

The main object of the present finding is to provide a process for making a "staple" connector which is easily automated and able to be simpler and more efficient than the known processes.

A further object of the disclosure is to make "staple" connectors with superior technical features compared to the similar known products.

This is obtained through the process set out in the characterising part of claim 1, in which a semi-worked product is first obtained, consisting of a single rigid body; the soft portions from which the so-called "staples" will be derived are obtained through depolymerisation processes, better described hereinafter.

As seen, the philosophy of the finding is exactly opposite to that of known processes. In these, one starts from a soft structure and then one or more portions of the article are "hardened"; vice versa, in this case we start from a rigid structure and one or more portions of the article are made soft.

In particular, the rigid body can be obtained by the well-known pultrusion process. As is known, the pultrusion process for making articles with impregnated aligned fibres essentially consists of two consecutive steps:
- impregnation step: unwinding of the fibres from the coils, longitudinal alignment thereof to form the yarn and impregnation of the same by immersion in a tank filled with epoxy resin;
- forming and polymerisation step: the yarn, consisting of the long and elongated impregnated fibres, is pulled by passing it through a hot mould, so that the resin is "crosslinked" up to solidification, imprisoning the fibres that become rigid themselves, so as to form a pultruded solid profile.

Constructively, depending on the type of mould used, different pultruded profiles are obtained, such as rectangular sheets, full rods, hollow tubes with round, rectangular or square section and even "C", "I", "L" profiles.

In general, the pultruded semi-worked products are used to make items for machine tools, measuring instruments, elastic systems, tubes for access control barriers, mixers of olives and other objects used in particular in industrial automation, automotive, aeronautics, hobby modelling and more.

In particular, with the pultrusion process characterised by an alignment and an almost perfect uniform distribution of the fibres and a very high reinforcement rate (expressed as a percentage of the volume of fibres with respect to the total volume) which cannot be achieved by any other technology, it is possible to manufacture pultruded products for use in the building field, as reinforcement in the form of sheets applied on walls or solid rods, which replace the steel rods.

Starting from the above, that is a market now consolidated for decades, a pultruded profile of normal production (by way of example we may mention the pultruded profiles produced by the Applicant, and in particular the carbon steel bars, with solid section or hollow section) is used to make "staple" connectors.

The process for making "staple" connectors referred to in the finding will be better illustrated by the description of a possible embodiment thereof, given only by way of non-limiting example, with the aid of the accompanying drawings, in which:
- fig. 1 (tab. I) shows the linear pultruded profile, having length of several metres, which makes up the starting semi-worked product;
- fig. 2 shows the step of cutting from the pultruded profile a bar equal to the total length of the final connector;
- figs. 3A and 3B show the depolymerisation step of a portion of the bar;
- fig. 4 shows a connector with a "staple";
- fig. 5 (tab. II) shows the linear pultruded profile, having length of several metres, which makes up the starting semi-worked product;
- fig. 6 shows the depolymerisation operation of the profile in fig. 5;
- fig. 7 shows a bar with multiple "staples"; according to the disclosure;
- fig. 8 shows a connector with two "staples'" according to the disclosure.

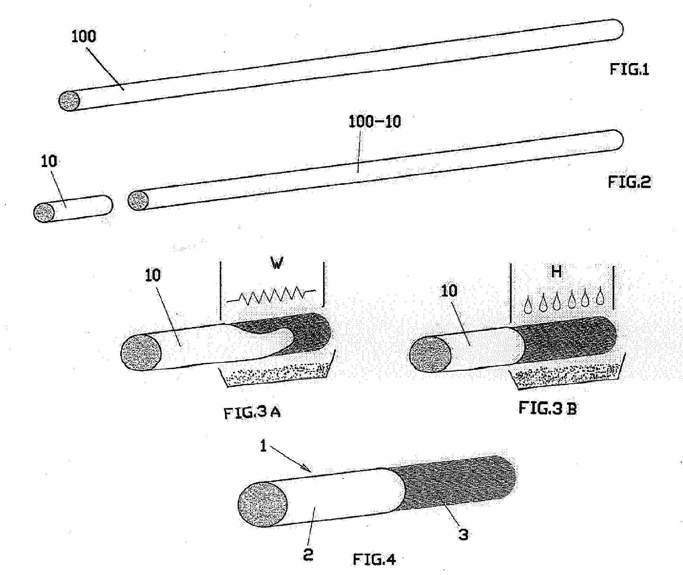

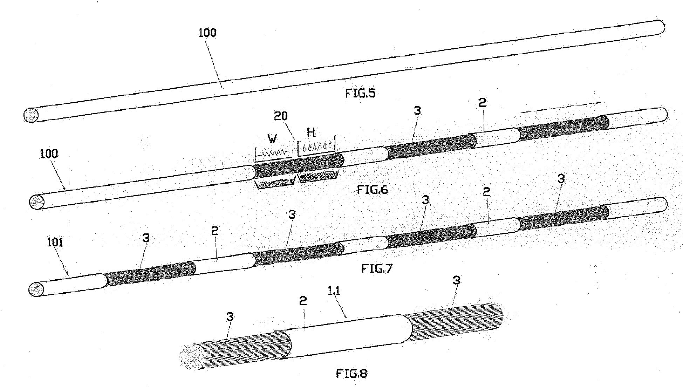

As can be seen from the figures, the starting semi-worked product for the production of the "staple" connector 1 and 1.1 advantageously consists of a rigid pultruded profile 100, preferably a rod (figs. 1 and 5) with full section, as shown in the figure, or with hollow section.

A bar 10 is cut from profile 100 having length equal to the length of the final connector 1 (usually no less than 40 mm) (see fig. 2).

A portion of the rigid bar 10, of length equal to the length that the "staple" must have, is subjected to a depolymerisation treatment to free the fibres from the impregnation resin (figs. 3A and 3B).

This treatment includes a high temperature heating step "W" (fig. 3A), which melts the resin, and a washing step with solvents and/or acids or by other methods suitable for the purpose "H" (fig. 3B), which completely removes the resin and cleans the fibres, leaving them free to form the "staple".

At the end of the process, a "staple" connector 1 is obtained, which is marketed, consisting of a rigid portion 2, where the fibres are impregnated with resin, and a soft portion 3, consisting of the loose fibres alone.

Similarly, with the process described above it is also possible to make continuous bars from which multiple staples are obtained.

Operationally, always starting from a semi-worked product consisting of a rigid profile 100 (fig. 5), successive portions of said profile are subjected to a depolymerisation treatment 20, so as to obtain soft portions 3, consisting of the loose fibres alone alternating with rigid portions 2, untreated (fig. 6).

At the end of the process, a continuous bar with multiple "staples" 101 is obtained according to the disclosure (fig. 7), which is marketed and from which, at a later time, the operator cuts out two-"staple" connectors 1.1 (fig. 8), as needed at the construction site.

The soft portion 3 with loose fibres may also be placed centrally between two rigid portions 2; in this way, articles can be obtained, for example in the shape of "L" and "C", folding them at the soft portion 3.

From the above, it is clear that the objects have been largely achieved; in particular, the mechanical characteristics of the rigid part 2 of the connector, such as density, elastic modulus, tensile strength, elongation at break and resistant section (important values to ensure the reinforcement function that the connector must carry out when it is set up) can be certified, since such a rigid part 2 is, in practice, nothing more than a portion of a pultruded profile produced industrially and therefore extensively tested.

Basically, with the process of the finding it is possible to make "staple" connectors quickly and having a good quality, which cannot be obtained in known processes, carried out using a manual operation of immersion of the fibres in the epoxy resin, with fully arbitrary methods, as it entirely depends on the operator's skill, and thus has uncertain results and, in any case, hardly verifiable in advance.

At the same time, this process is also much more practical and cost-effective compared to the processes described in the prior art documents.

Of course, the details of implementation of the process, as well as the shapes and sizes of the "staple" connector obtained with said process may be variable, as long as everything is within the limits defined by the following claims.

## Claims

1. PROCESS FOR MAKING A SO-CALLED "STAPLE" CONNECTOR, consisting of a rigid body (100) of composite composition, obtained from a matrix of resins, such as of the epoxy or vinyl type, within which a plurality of fibres is present, by the entire length thereof, such as high strength carbon fibres, "E-type" fibreglass, Kevlar®, Aramid or other similar materials suitable for the purpose, said body having at least one rigid portion consisting of a bundle of mutually bonded fibres and of at least one soft portion consisting of loose fibres, arranged substantially parallel, which can be opened and frayed to form the so-called "staple", said process comprising the following steps:
- making a semi-worked product consisting of a single rigid body made from a bundle of fibres mutually bonded by means of resin;
- cutting the rigid body (100) into bars (10) having a length equal to the length of the final connector (1);
- depolymerisation treatment on at least a portion of the semi-worked product, comprising a heating step at high temperature to dissolve the resin;
**said process being characterised in that**
it also provides a washing step with solvents and/or acids or by other methods suitable for the purpose, to completely remove the resin and clean the fibres, making them free to form the "staple", giving rise to at least one rigid portion followed by a soft portion.

2. PROCESS FOR MAKING A SO-CALLED "STAPLE" CONNECTOR, according to claim 1, **characterised in that** successive portions of the semi-worked product, consisting of the rigid body (100), are subjected to the depolymerisation treatment (20), so as to have "soft" portions, only consisting of loose fibres (3) alternating with rigid untreated portions (2), to obtain, at the end of the operation, a continuous bar (101) with multiple "staples", which is put onto the market and from which, at a later time, the operator cuts one or two-"staple" connectors (1.1).

## Patentansprüche

1. VERFAHREN ZUR HERSTELLUNG EINES KOHLENSTOFFFASERVERSTÄRKTEN VERBINDERS, bestehend aus einem starren Körper (100) aus einer Kompositzusammensetzung, die aus einer Harzmatrix, beispielsweise vom Epoxy- oder Vinyltyp, erhalten ist, in dem eine Mehrzahl von Fasern über die gesamte Länge davon, beispielsweise hochfeste Kohlenstofffasern, Glasfaser vom "E-Typ", Kevlar®, Aramid oder ähnliche, für diesen Zweck geeignete Materialien vorhanden sind, wobei der Körper mindestens einen starren Abschnitt aufweist, der aus einem Bündel von miteinander verbundenen Fasern und aus mindestens einem weichen Abschnitt besteht, der aus losen Fasern besteht, die im Wesentlichen parallel angeordnet sind, die geöffnet und ausgefranst sein können, um die sogenannte "Kohlenstofffaserverstärkung" zu bilden, wobei das Verfahren folgende Schritte umfasst:
- Herstellen eines Halbfertigprodukts, bestehend aus einem starren Einzelkörper aus einem Bündel von mittels Harz miteinander verbundenen Fasern;
- Schneiden des starren Körpers (100) in Stangen (10) mit einer Länge, die gleich der Länge des letzten Verbinders (1) ist;
- Depolymerisierungsbehandlung in mindestens einem Abschnitt des Halbfertigprodukts, umfassend einen Schritt des Erhitzens auf hohe Temperaturen, um das Harz zu schmelzen;
**wobei das Verfahren dadurch gekennzeichnet ist, dass** es außerdem einen Schritt des Waschens mit Lösungsmitteln und/oder Säuren oder andere zweckmäßige Methoden bereitstellt, um das Harz vollständig zu entfernen und die Fasern zu reinigen und frei zu machen, um die "Kohlenstofffaserverstärkung" zu bilden und mindestens einen starren Abschnitt, gefolgt von einem weichen Abschnitt, hervorzubringen.

2. VERFAHREN ZUR HERSTELLUNG EINES KOHLENSTOFFFASERVERSTÄRKTEN VERBINDERS nach Anspruch 1, **dadurch gekennzeichnet, dass** aufeinanderfolgende Abschnitte des Halbfertigprodukts, bestehend aus dem starren Körper (100), der Depolymerisierungsbehandlung (20) unterworfen werden, um "weiche" Abschnitte zu erhalten, die nur aus losen Fasern (3) bestehen, im Wechsel mit starren, unbehandelten Abschnitten (2), um am Ende des Vorgangs eine durchgehende Stange (101) mit mehrfachen "Kohlenstofffaserverstärkungen" zu erhalten, die auf den Markt gebracht wird und von der zu einem späteren Zeitpunkt der Bediener einen oder zwei "kohlenstofffaserverstärkte" Verbinder (1.1) abschneidet.

## Revendications

1. Procédé de fabrication d'un soi-disant connecteur « agrafe », constitué d'un corps rigide (100) de composition composite, obtenue à partir d'une matrice de résines, telle que du type époxy ou vinyle, à l'intérieur desquelles une pluralité de fibres est présente, par la longueur complète de celles-ci, telles que des fibres de carbone à haute résistance, de la fibre de verre de type « E », du Kevlar®, de l'Aramide ou d'autres matériaux identiques adaptés à l'usage, ledit corps ayant au moins une partie rigide constituée d'un faisceau de fibres mutuellement liées et d'au moins une partie molle constituée de fibres lâches, agencées essentiellement en parallèle, qui peut être ouverte et effilochée afin de former la soi-disante « agrafe », ledit procédé comprenant les étapes suivantes :
- fabrication d'un produit semi-fini constitué d'un corps rigide unique fabriqué à partir d'un faisceau de fibres mutuellement liées au moyen d'une résine ;
- découpe du corps rigide (100) en barres (10) ayant une longueur égale à la longueur du connecteur final (1) ;
- traitement de dépolymérisation sur au moins une partie du produit semi-fini, comprenant une étape de chauffage à haute température afin de dissoudre la résine ;
**ledit procédé étant caractérisé en ce que**
il inclut également une étape de lavage avec solvants et/ou acides ou au moyen d'un autre procédé adapté à l'usage, afin d'éliminer complètement la résine et de nettoyer les fibres, les rendant libres de former « l'agrafe », donnant lieu à au moins une partie rigide suivie d'une partie molle.

2. Procédé de fabrication d'un soi-disant connecteur « agrafe », selon la revendication 1, **caractérisé en ce que** des parties successives du produit semi-fini, constitué du corps rigide (100), sont soumises au traitement de dépolymérisation (20), de manière à avoir des parties « molles », constituées uniquement de fibres lâches (3) en alternance avec des parties non traitées rigides (2), afin d'obtenir, à la fin de l'opération, une barre continue (101) ayant de nombreuse « agrafes », qui est mise sur le marché et à partir de laquelle, à une date ultérieure, l'opérateur découpe un ou deux connecteurs « agrafes » (1.1).
